# FASCICULE DE BREVET EUROPEEN

(11) **EP 3 831 120 B1**
(45) Date de publication et mention de la délivrance du brevet: **15.07.2026**
(21) Numéro de dépôt: 19742764.4
(22) Date de dépôt: 24.07.2019
(51) Int. Cl.: H04W 28/02

(54) **PROCÉDÉ DE TRANSMISSION DE DONNÉES VERS DEUX PASSERELLES DISTINCTES, ET DISPOSITIF CORRESPONDANT**
VERFAHREN ZUR DATENÜBERTRAGUNG AN ZWEI GETRENNTE GATEWAYS UND ENTSPRECHENDE VORRICHTUNG
METHOD FOR TRANSMITTING DATA TO TWO SEPARATE GATEWAYS, AND CORRESPONDING DEVICE

(30) Priorité: 30.07.2018 FR 1857103
(43) Date de publication de la demande: 09.06.2021
(73) Titulaire: Banks and Acquirers International Holding, 75015 Paris (FR)
(72) Inventeur: DE SA COSTA, Sylvain, 26000 Valence (FR); MENARDAIS, Michaël, 33160 Saint-Menard-en-Jalles (FR); BOUYAUD, Mickael, 91370 Verrieres-le-Buisson (FR)
(74) Mandataire: LLR
(86) Numéro de dépôt international: PCT/EP2019/069989
(87) Numéro de publication internationale: WO 2020/025430

(56) Documents cités:
- WO-A1-2010/034377
- WO-A2-2007/130281
- US-A1- 2008 256 251
- US-A1- 2011 032 868
- DVB ORGANIZATION: "a073r1.pdf", DVB, DIGITAL VIDEO BROADCASTING, C/O EBU - 17A ANCIENNE ROUTE - CH-1218 GRAND SACONNEX, GENEVA - SWITZERLAND, 16 August 2004 (2004-08-16), XP017826865

## Description

### 1. Domaine de l'invention

L'invention concerne la transmission de données entre un équipement de communication et une passerelle interconnectant un premier réseau, dans lequel se situe l'équipement de communication, et un deuxième réseau. Plus particulièrement, l'invention concerne la transmission simultanée de données depuis l'équipement de communication vers deux réseaux distincts.

### 2. Art antérieur et ses inconvénients

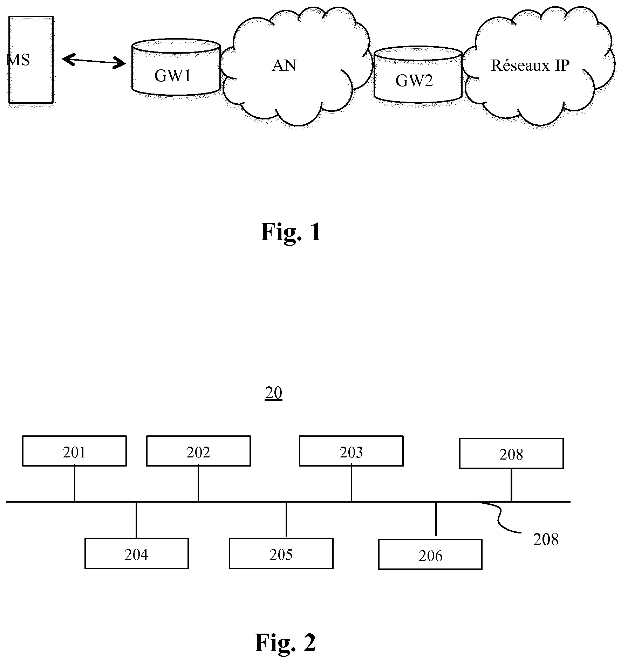

La **figure 1** représente de manière schématique une architecture d'un système de communication orienté paquets.

Un tel système 1 comprend au moins une station mobile MS, telle qu'un téléphone mobile, un Smartphone, etc., et une première passerelle GW1 interconnectant un réseau de communication radio (non représenté sur la figure), dans la couverture radio duquel la station mobile MS se situe, avec un réseau d'accès AN. Le système 1 comprend également une deuxième passerelle GW2 interconnectant le réseau d'accès AN avec un ou plusieurs réseaux IP ( Internet Protocol ou protocole internet).

Lorsque le système 1 est conforme aux normes définissant la 2G ou la 3G, respectivement deuxième ou troisième génération, la première passerelle GW1 est une passerelle SGSN (Serving GPRS Support Node) et la deuxième paserelle GW2 est une paserelle du type GGSN (Gateway GPRS Support Node).

Lorsque le système 1 est conforme aux normes définissant la 4G (quatrième génération) ou LTE (Long Terra Evolution), la première passerelle GW1 est une passerelle dite « Serving Gateway » et la deuxième paserelle GW2 est une paserelle du type PDN (Pocket Data Network gateway).

Afin d'établir une connexion avec un équipement situé dans un réseau IP interconnecté au réseau d'accès AN par la deuxième passerelle GW2, la station mobile MS initie, de manière classique une procédure d'attachement auprès de la première passerelle GW1.

Une fois cette procédure d'attachement effectuée, la station mobile MS active un contexte de connexion définissant les paramètres d'établissement de la connexion à établir. L'activation d'un tel contexte permet à la station mobile MS d'obtenir une adresse IP et de définir une qualité de service QoS avec laquelle la transmission de données via la connexion à établir est effectuée. Comme également connu du document WO 2010/034377, ici une même station mobile MS peut activer plusieurs contextes différents.
Dans un système 1 est conforme aux normes définissant la 3G, un tel contexte est appelé contexte PDP (Pocket Data Protocol).

Dans système 1 est conforme aux normes définissant la 4G, un tel contexte est appelé contexte EPS (Evolved Pocket System).

De tels contextes sont notamment précisés par un nom de point d'accès ou APN (Access Point Name) qui identifie la deuxième passerelle GW2. Un tel nom de point d'accès est commun à tous les contextes activés par une station mobile MS données.

Dans le domaine des terminaux de paiement, une nouvelle génération de terminaux de paiement modulaires et riches en fonctionnalités apparait. De tels terminaux de paiement, dits intelligents, peuvent prendre la forme d'une tablette tactile acceptant tous les moyens de paiement et offrant des services métier nécessaires à la gestion d'un commerce. Une telle tablette embarquant un système d'exploitation, comme par exemple le système d'exploitation *Android,* il est possible d'intégrer simplement et rapidement des applications métier, telles que des applications de facturation par exemple, en plus d'applications classiques dans de tels terminaux de paiement intelligents, et d'ainsi améliorer l'expérience des commerçants.

De tels terminaux de paiement intelligents transmettent à la fois des données relatives à des transactions de paiement et par exemples des données relatives à des mises à jour logicielles.

Les données relatives à des transactions de paiement transmises par ces terminaux de paiement sont sensibles et il est important que cette transmission s'effectue avec une grande fiabilité. Il est ainsi important que les données transmises ne se perdent pas lors de la transmission et qu'elles ne soient pas corrompues afin de pouvoir être traitées.

Les données relatives à des mises à jour logicielles sont des données pour lesquelles la fiabilité de transmission requises est moins grande. Les demandes de connexion peuvent être plus rares mais le volume des données transmises peut être conséquent.

Ces nouveaux terminaux de paiement peuvent également embarquer aussi des applications dites « business » qui nécessitent l'établissement de connexions permanentes avec des serveurs distants et qui peuvent générer un volume de données échangées difficilement estimable.

Cependant, à l'heure actuelle, un terminal de paiement intelligent n'est pas capable de transmettre ces trois types de données conformément à leurs contraintes de transmission respectives. Par conséquents les données relatives à des transactions de paiement et les données relatives à des mises à jour logicielles ou relatives à des applications « business » sont transmises avec les mêmes paramètres de transmission tels que par exemple un niveau de qualité de service ou QoS (*Quality of Service*) identique, ce qui peut représenter un coût non négligeable pour le commerçant.

Il existe donc un besoin de fournir une méthode de transmission de données depuis un équipement de communication qui permette d'appliquer des contraintes de transmission simultanées et distinctes en fonction du type de données à transmettre.

### 3. Exposé de l'invention

L'invention répond à ce besoin en proposant un procédé de transmission de données mis en œuvre par un équipement de communication situé dans un premier réseau de communication, le procédé comprenant une phase de transmission de données relatives à un premier type de service au travers d'une première connexion établie entre l'équipement de communication et une première passerelle interconnectant le premier réseau de communication et un deuxième réseau de communication conformément à un premier jeu de paramètres comprenant un identifiant de la première passerelle et des paramètres relatifs à la transmission des données relatives au premier type de service, **caractérisé en ce que** le procédé comprend, au cours de la phase de transmission, une étape d'établissement d'au moins une deuxième connexion entre l'équipement de communication et une deuxième passerelle interconnectant le premier réseau de communication et un troisième réseau de communication conformément à un deuxième jeu de paramètres comprenant un identifiant de la deuxième passerelle et des paramètres relatifs à la transmission de données relatives à un deuxième type de service.

Un tel procédé de transmission permet à un équipement de communication d'établir simultanément deux connexions avec deux passerelles différentes et ainsi de pouvoir échanger des données associées à des paramètres de transmission différents.

Par exemple, la première passerelle et la deuxième passerelle sont des passerelles de type GGSN (Gateway GPRS Support Node) telles que définies par l'organisme de normalisation 3GPP (Third Generation Partnership Project).

Les paramètres relatifs à la transmission de données relatives à un type de service sont par exemple un nom de point d'accès ou APN. Un nom de point d'accès comprend un identifiant de la passerelle GGSN avec laquelle une connexion est établie et des paramètres représentatifs d'un type de service associé aux données à transmettre.

Ainsi, selon le procédé de transmission précédemment décrit, un équipement de communication est capable d'activer deux contextes PDP auprès de deux passerelles GGSN différentes contrairement à ce que prévoit l'art antérieur.

L'équipement de communication peut, par conséquent, transmettre simultanément des données relatives à des types de services différents ayant des paramètres de transmission distincts. En d'autres termes, l'équipement de communication est capable de transférer des données relatives à un premier type de service tel que par exemple un service sans garantie au travers d'une première connexion et des données relatives à un type de service tel que par exemple un service temps réel au travers d'une deuxième connexion.

Selon un mode de réalisation du procédé de transmission, les paramètres relatifs à la transmission des données relatives au premier type de service et des données relatives au deuxième type de service comprennent au moins un paramètre représentatif d'un type de service associé aux données à transmettre.

Un tel type de service est par exemple un service temps réel, ou un service sans garanti ou un service permettant la transmission sécurisée de données, etc.

Selon un mode de réalisation du procédé de transmission, le paramètre représentatif d'un type de service associé aux données à transmettre comprend un identifiant d'un niveau de qualité de service associé aux données à transmettre.

Ainsi chaque connexion établie par l'équipement de communication est associée à un niveau de qualité de service défini lors de son établissement.

Selon un mode de réalisation du procédé de transmission, le paramètre représentatif d'un type de service associé aux données à transmettre comprend un identifiant d'un protocole de transport conformément auxquelles les données sont destinées à être transmises.

Ainsi chaque connexion est établie conformément à un protocole donné tel que par exemple RTP (Real-time Transport Protocol ou protocole de transport en temps réel) ou IPsec (Internet Protocol Security).

Selon un mode de réalisation du procédé de transmission, les paramètres relatifs à la transmission des données relatives au premier type de service et des données relatives au deuxième type de service comprennent au moins un identifiant d'un opérateur contrôlant le premier réseau de communication.

Selon un mode de réalisation du procédé de transmission, les paramètres relatifs à la transmission des données relatives à un premier type de service et des données relatives à un deuxième type de service comprennent au moins un identifiant d'un tiroir pratiqué dans l'équipement de communication et dan lequel est destinée à être insérée une carte SIM.

Dans certains cas, il peut être utile que l'équipement de communication puisse utiliser plusieurs cartes SIM. Dans ce cas de figues, il est possible d'établir certains types de connexion avec une carte SIM et pas avec une autre.

Selon un mode de réalisation du procédé de transmission, le premier type de service spécifié dans le premier jeu de paramètres conformément auxquels la première connexion est établie est un type de service dit sans garantie.

Il est utile d'avoir une connexion associée à un type de service dit sans garantie. Il est alors toujours possible de transmettre des données, même lorsqu'il n'est pas possible d'établir une connexion conformément aux paramètres relatifs à la transmission desdites données requis.

L'invention concerne également un équipement de communication situé dans un premier réseau de communication et comprenant des moyens de transmission de données relatives à un premier type de service au travers d'une première connexion établie avec une première passerelle interconnectant le premier réseau de communication et un deuxième réseau de communication conformément à un premier jeu de paramètres comprenant un identifiant de la première passerelle et des paramètres relatifs à la transmission des données relatives au premier type de service, **caractérisé en ce que** l'équipement de communication comprend des moyens d'établissement d'au moins une deuxième connexion avec une deuxième passerelle interconnectant le premier réseau de communication et un troisième réseau de communication conformément à un deuxième jeu de paramètres comprenant un identifiant de la deuxième passerelle et des paramètres relatifs à la transmission de données relatives à un deuxième type de service, la première connexion étant encore active.

Un tel équipement peut être compris dans un téléphone mobile, une tablette, etc.

L'invention concerne encore un terminal de paiement situé dans un premier réseau de communication comprenant au moins un équipement de communication comprenant des moyens de transmission de données relatives à un premier type de service au travers d'une première connexion établie avec une première passerelle interconnectant le premier réseau de communication et un deuxième réseau de communication conformément à un premier jeu de paramètres comprenant un identifiant de la première passerelle et des paramètres relatifs à la transmission des données relatives au premier type de service, **caractérisé en ce que** l'équipement de communication comprend des moyens d'établissement d'au moins une deuxième connexion avec une deuxième passerelle interconnectant le premier réseau de communication et un troisième réseau de communication conformément à un deuxième jeu de paramètres comprenant un identifiant de la deuxième passerelle et des paramètres relatifs à la transmission de données relatives à un deuxième type de service, la première connexion étant encore active.

L'invention concerne enfin un produit programme d'ordinateur comprenant des instructions de code de programme pour la mise en œuvre d'un procédé tel que décrit précédemment, lorsqu'il est exécuté par un processeur.

L'invention vise également un support d'enregistrement lisible par un ordinateur sur lequel est enregistré un programme d'ordinateur comprenant des instructions de code de programme pour l'exécution des étapes du procédé de transmission selon l'invention tel que décrit ci-dessus.

Un tel support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, un tel support d'enregistrement peut être un support transmissible tel qu'un signal électrique ou optique, qui peut être acheminé via un câble électrique ou optique, par radio ou par d'autres moyens, de sorte que le programme d'ordinateur qu'il contient est exécutable à distance. Le programme selon l'invention peut être en particulier téléchargé sur un réseau par exemple le réseau Internet.

Alternativement, le support d'enregistrement peut être un circuit intégré dans lequel le programme est incorporé, le circuit étant adapté pour exécuter ou pour être utilisé dans l'exécution du procédé de contrôle d'affichage précité.

### 4. Liste des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :
- **la** **figure 1** représente de manière schématique une architecture d'un système de communication orienté paquets selon l'art antérieur;
- **la** **figure 2** représente un équipement de communication 20 selon un mode de réalisation de l'invention;

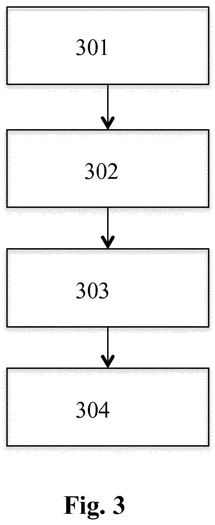

- les **figures 3****,** **4** et **5** représentent les étapes mises en œuvre lors de l'exécution du procédé de transmission selon un mode de réalisation de l'invention.

### 5. Description détaillée de modes de réalisation de l'invention

La présente invention propose une solution permettant à un équipement de communication de pouvoir établir plusieurs connexions simultanées avec des réseaux de communication distincts afin de pouvoir transmettre des données selon des paramètres de transmission différents et de manière transparente pour un utilisateur de l'équipement de communication.

La **figure 2** représente un équipement de communication 20 selon un mode de réalisation de l'invention.

L'équipement de communication 20 peut comprendre au moins un processeur matériel 201, une unité de stockage 202, un dispositif de saisie 203, un dispositif d'affichage 204, une interface 205, au moins une interface de réseau 206 et un gestionnaire de communications 207 qui sont connectés entre eux au travers d'un bus 208. Bien entendu, les éléments constitutifs de l'équipement de communication 20 peuvent être connectés au moyen d'une connexion autre qu'un bus.

Le processeur 201 commande les opérations l'équipement de communication 20. L'unité de stockage 202 stocke au moins un programme pour la mise en œuvre d'un procédé de transmission selon un mode de réalisation de l'invention et, dans le cas où l'équipement de communication est embarqué dans un terminal de paiement au moins un programme relatif à l'exécution de transactions de paiement, à exécuter par le processeur 201, et diverses données, telles que des paramètres utilisés pour des calculs effectués par le processeur 201, des données intermédiaires de calculs effectués par le processeur 201, etc. Le processeur 201 peut être formé par tout matériel ou logiciel connu et approprié, ou par une combinaison de matériel et de logiciel. Par exemple, le processeur 201 peut être formé par un matériel dédié tel qu'un circuit de traitement, ou par une unité de traitement programmable telle qu'une unité centrale de traitement (*Central Processing Unit*) qui exécute un programme stocké dans une mémoire de celui-ci.

L'unité de stockage 202 peut être formée par n'importe quel moyen approprié capable de stocker le programme ou les programmes et des données d'une manière lisible par un ordinateur. Des exemples d'unité de stockage 202 comprennent des supports de stockage non transitoires lisibles par ordinateur tels que des dispositifs de mémoire à semi-conducteurs, et des supports d'enregistrement magnétiques, optiques ou magnéto-optiques chargés dans une unité de lecture et d'écriture.

Le dispositif de saisie 203 peut être formé par un clavier, un dispositif de pointage tel qu'une souris à utiliser par un utilisateur pour entrer des commandes. Le dispositif d'affichage 204 peut être également formé par un module d'affichage, tel que par exemple une interface graphique utilisateur ou GUI (pour *Graphical User Interface*)*.* Le dispositif de saisie 203 et le dispositif d'affichage 204 peuvent être formés intégralement au moyen d'un écran tactile, par exemple.

L'interface 205 fournit une interface entre l'équipement de communication 20 et un appareil externe tel qu'une imprimante. L'interface 205 peut communiquer avec l'appareil externe via une connexion filaire ou sans fil.

Au moins une interface réseau 206 fournit une connexion entre l'équipement de communication 20 et un équipement distant, telle qu'une passerelle GW, via un réseau de communication, tel qu'Internet. L'interface réseau 206 peut fournir, en fonction de sa nature, une connexion filaire ou sans fil au réseau.

Le gestionnaire de communication 207 est contrôlé par le processeur 201 conformément aux instructions du programme pour la mise en œuvre d'un procédé de transmission selon un mode de réalisation de l'invention. Le fonctionnement du gestionnaire de communication 207 est expliqué plus en détail en lien avec les étapes du pour la mise en œuvre d'un procédé de transmission selon un mode de réalisation de l'invention. Le gestionnaire de communication peut être un module logiciel ou une combinaison de matériel et de logiciel.

Les **figures 3****,** **4** et **5** représentent les étapes mises en œuvre lors de l'exécution du procédé de transmission selon un mode de réalisation de l'invention.

En référence à la figure 3, dans une étape 301, le gestionnaire de communication 207 reçoit au moins un jeu de paramètres associé à au moins une application, telle que par exemple une application de paiement ou une application de jeu en ligne, chargée dans l'équipement de communication 20.

Chaque application fournit un type de service, par exemple un service de type paiement, un service de type maintenance ou encore un service du type par défaut ou sans garantie. Les différents types de service sont par exemple associés à un score qui indique la priorité à donner au traitement de données associées à ces différents types de services. Ainsi, le type paiement est prioritaire au type maintenance et est, par exemple, associé à un score plus élevé que le type maintenance.

Dans un premier mode de réalisation, le gestionnaire de communication 207 peut recevoir un jeu de paramètres associé à au moins une application via le dispositif de saisie 203. Dans ce mode de réalisation, un utilisateur de l'équipement de communication saisit manuellement le jeu de paramètres.

Dans un deuxième mode de réalisation, le gestionnaire de communication 207 peut recevoir un jeu de paramètres associé à au moins une application lors de l'installation de l'application dans l'équipement de communication 20. Le jeu de paramètres associé à l'application est alors transmis au gestionnaire de communication 207 au travers du bus 208.

Ainsi, un jeu de paramètres associé à une application comprend au moins un identifiant d'une passerelle GW avec laquelle une connexion peut être établie afin de transmettre les données relatives à l'application et des paramètres relatifs à la transmission des données relatives au type de service fourni par l'application. L'identifiant de la passerelle GW est par exemple un nom de point d'accès.

Les paramètres relatifs à la transmission des données relatives au type de service fourni par l'application sont par exemple un identifiant du type de service, un identifiant d'un protocole de transport conformément auxquelles les données sont destinée à être transmises ou encore un identifiant d'un niveau de qualité de service associé aux données à transmettre, etc.

Le jeu de paramètres associé à une application peut également comprendre un identifiant d'un opérateur en télécommunications en charge du réseau d'accès dans lequel l'équipement de communication 20 est situé ainsi que des informations nécessaire à l'attachement de l'équipement de communication 20 avec la passerelle GW. En effet, certaines applications embarquées dans l'équipement de communication 20 peuvent être autorisées à échanger des données lorsque l'équipement de communication 20 est affilié à un premier opérateur en télécommunications et ne pas y être autorisées lorsque l'équipement de communication 20 est affilié à un deuxième opérateur en télécommunications.

Le jeu de paramètres associé à une application peut comprendre un identifiant d'un tiroir pratiqué (non représenté sur les figures) dans l'équipement de communication 20 et dans lequel est une carte SIM est destinée à être insérée. Le jeu de paramètres associé à une application peut également comprendre du matériel d'authentification d'un utilisateur de l'équipement de communication 20 tels que des identifiants et un mot de passe.

Un jeu de paramètres associés à une application correspond à un contexte PDP ou à un contexte EPS. Ainsi, une connexion établie entre l'équipement de communication 20 et une passerelle GW de type GGSN ou PDN correspond à un contexte PDP ou à un contexte EPS.

Dans une étape 302, le gestionnaire de communication 207 mémorise les jeux de paramètres associés à une application reçus dans une table mémorisée dans l'unité de stockage 202. Si pour un même type de service, il y a plusieurs jeux de paramètres associés à une application différents, seul le jeu de paramètres associés à une application le plus récent est conservé.

Dans une étape 303, le gestionnaire de communication 207 reçoit, pour chaque type de service un identifiant d'une interface réseau 206 de l'équipement de communication 20 utilisée pour établir une connexion avec la passerelle GW identifiée par le nom de point d'accès APN compris dans le jeu de paramètres associé à une application fournissant le type de service en question. Un tel identifiant d'une interface réseau 206 est par exemple son adresse MAC (pour *Medium Access Contol*)*.*

Ainsi, à l'issue de l'étape 303, le gestionnaire de communication 207 a établi une correspondance entre des types de service et des interfaces réseau 206.

Au cours d'une étape 304, le gestionnaire de communication 207 déclenche l'établissement d'une connexion associée au type de service sans garantie ou *« best effort* » entre l'équipement de communication 20 et une passerelle GW-Def interconnectant le réseau d'accès AN et un réseau IP, dite connexion par défaut. Une telle connexion par défaut est utilisée pour transmettre des données émises par exemple par des applications fournissant un service du type par défaut, ou encore des données émises par des applications pour lesquelles le type de service fourni n'est pas connu.

La connexion par défaut est une connexion dite « permanente », c'est-à-dire que temps que l'équipement de communication est sous tension et est attaché à un réseau de communication, cette connexion par défaut n'est pas interrompue.

Si une connexion par défaut antérieure est déjà établie lors de l'établissement de la connexion par défaut, la connexion par défaut antérieure est interrompue et remplacée par la connexion par défaut en cours d'établissement.

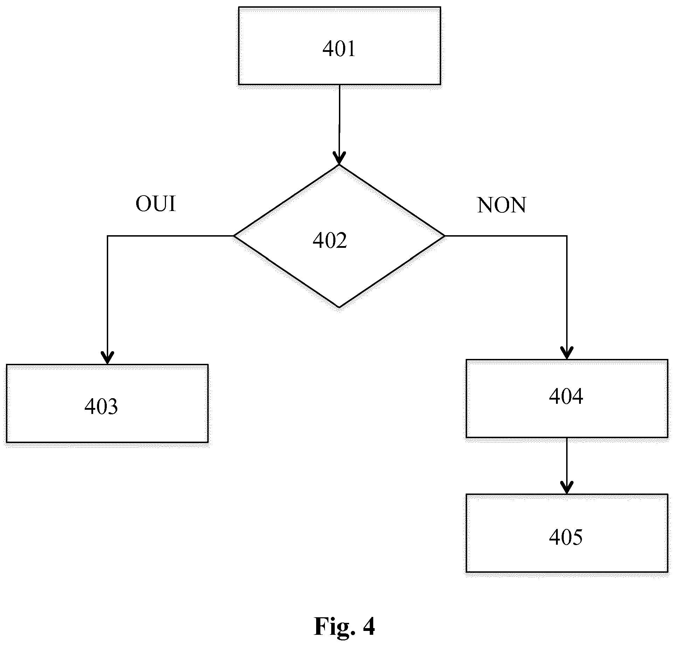

En référence à la figure 4, lorsqu'une application embarquée dans l'équipement de communication 20 déclenche l'établissement d'une session de communication avec un serveur distant, tel que par exemple un serveur bancaire, elle en informe le gestionnaire de connexion 207, par exemple en transmettant un message de demande d'établissement de connexion, dans une étape 401.

Dans une étape 402, le gestionnaire de connexion 207 détermine un état, activé ou non activé, d'un contexte PDP ou EPS associé au type de service fourni par l'application.

Si un tel contexte PDP ou EPS est activé, le gestionnaire de connexion transmet, dans une étape 403, un message à destination de l'application comprenant un identifiant de l'interface réseau 206 au travers de laquelle la session de communication peut être établie.

Si un tel contexte PDP ou EPS n'est pas activé, le gestionnaire de communication 207 déclenche l'activation du contexte PDP ou EPS correspondant au service fourni par l'application dan une étape 404.

Dans une étape 405, le gestionnaire de connexion 207 transmet un message à destination de l'application comprenant un identifiant de l'interface réseau 206 au travers de laquelle la session de communication peut être établie.

Le fait que d'autres contextes PDP ou EPS soient activés n'empêche en rien l'exécution des étapes 401 à 405. Le gestionnaire de communication 207 permet d'activer plusieurs contextes PDP ou EPS simultanément même lorsque ces derniers comprennent des noms de points d'accès différents et correspondent donc à des connexions établies avec des réseaux IP différents.

Dans un mode de réalisation du procédé de transmission, le gestionnaire de connexion peut déterminer que le contexte PDP ou EPS à activer nécessite un changement de carte SIM. Dans un tel mode de réalisation, tous les contextes PDP ou EPS actifs sont désactivés. Une fois le changement de carte SIM effectué, le procédé de transmission est exécuté de nouveau depuis l'étape 301 jusqu'à l'étape 405.

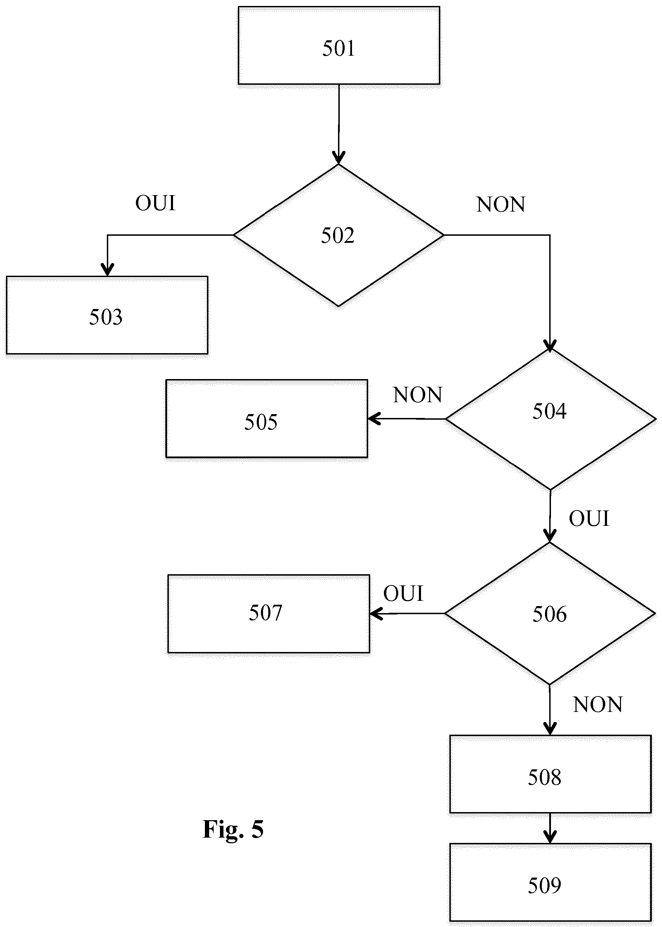

En référence à la figure 5, lorsqu'une application embarquée dans l'équipement de communication 20 déclenche la clôture une session de communication avec un serveur distant, elle en informe le gestionnaire de connexion 207, par exemple en transmettant un message de demande de clôture de connexion, dans une étape 501.

Dans une étape 502, le gestionnaire de connexion 207 détermine le type de service fourni par l'application.

Si le type de service fourni par l'application est le type sans garantie, le gestionnaire de connexion 207 autorise l'application à clôturer la session dans une étape 503, par exemple en transmettant un message d'autorisation. Cependant, comme le type de service est sans garantie, le contexte PDP ou EPS correspondant ne peut être désactivé. Ainsi, le gestionnaire de connexion 207 ne déclenche pas la désactivation du contexte PDP ou EPS et la connexion par défaut associée n'est pas interrompue.

Si le type de service fourni par l'application est d'un autre type que le type sans garantie, le gestionnaire de connexion 207 détermine si le contexte PDP ou EPS correspondant au type de service est activé dans une étape 504.

Si le contexte PDP ou EPS correspondant au type de service n'est pas activé, le gestionnaire de connexion 207 autorise l'application à clôturer la session dans une étape 505.

Si le contexte PDP ou EPS correspondant au type de service est activé, le gestionnaire de connexion 207 détermine, dans une étape 506, si une autre application fournissant le même type de service a une session de communication active, c'est-à-dire qu'elle transmet des données au travers de la connexion associée.

Si la connexion est utilise par une autre application, le gestionnaire de connexion 207 autorise l'application à clôturer la session dans une étape 507, par exemple en transmettant un message d'autorisation. Cependant, le contexte PDP ou EPS correspondant ne peut être désactivé puisqu'une autre application transmet des données au travers de la connexion correspondante. Ainsi, le gestionnaire de connexion 207 ne déclenche pas la désactivation du contexte PDP ou EPS et la connexion associée n'est pas interrompue.

Si la connexion n'est pas utilisée par une autre application, le gestionnaire de connexion 207 autorise l'application à clôturer la session dans une étape 508, par exemple en transmettant un message d'autorisation.

Dans une étape 509, le gestionnaire de connexion 207 désactive le contexte PDP ou EPS correspondant et la connexion associée est interrompue.

## Revendications

1. Procédé de transmission de données mis en œuvre par un équipement de communication (20) situé dans un premier réseau de communication, le procédé comprenant :
- une étape d'établissement d'au moins une première connexion entre l'équipement de communication (20) et une première passerelle (GW) interconnectant le premier réseau de communication et un deuxième réseau de communication conformément à un premier jeu de paramètres comprenant un identifiant de la première passerelle (GW) et des paramètres relatifs à la transmission de données relatives à un premier type de service dit sans garantie, ladite première connexion étant active aussi longtemps que l'équipement de communication (20) est attaché au premier réseau de communication,
- une phase de transmission de données relatives au premier type de service au travers de ladite première connexion établie entre l'équipement de communication (20) et la première passerelle (GW), **caractérisé en ce que** le procédé comprend, au cours de la phase de transmission, une étape d'établissement d'au moins une deuxième connexion entre l'équipement de communication (20) et une deuxième passerelle interconnectant le premier réseau de communication et un troisième réseau de communication conformément à un deuxième jeu de paramètres comprenant un identifiant de la deuxième passerelle et des paramètres relatifs à la transmission de données relatives à un deuxième type de service.

2. Procédé de transmission selon la revendication 1, **caractérisé en ce que** les paramètres relatifs à la transmission des données relatives au deuxième type de service comprennent au moins un paramètre représentatif d'un type de service associé aux données à transmettre.

3. Procédé de transmission selon la revendication 2, **caractérisé en ce que** le paramètre représentatif d'un type de service associé aux données à transmettre comprend un identifiant d'un niveau de qualité de service associé aux données à transmettre.

4. Procédé de transmission selon la revendication 2 ou la revendication 3, **caractérisé en ce que** le paramètre représentatif d'un type de service associé aux données à transmettre comprend un identifiant d'un protocole de transport conformément auxquelles les données sont destinées à être transmises.

5. Procédé de transmission selon la revendication 1, **caractérisé en ce que** les paramètres relatifs à la transmission des données relatives au premier type de service et des données relatives au deuxième type de service comprennent au moins un identifiant d'un opérateur contrôlant le premier réseau de communication.

6. Procédé de transmission selon la revendication 1, **caractérisé en ce que** les paramètres relatifs à la transmission des données relatives à un premier type de service et des données relatives à un deuxième type de service comprennent au moins un identifiant d'un tiroir pratiqué dans l'équipement de communication (20) et dan lequel est destinée à être insérée une carte SIM.

7. Équipement de communication (20) situé dans un premier réseau de communication et comprenant :
- des moyens d'établissement d'au moins une première connexion entre l'équipement de communication (20) et une première passerelle (GW) interconnectant le premier réseau de communication et un deuxième réseau de communication conformément à un premier jeu de paramètres comprenant un identifiant de la première passerelle (GW) et des paramètres relatifs à la transmission de données relatives à un premier type de service dit sans garantie, ladite première connexion étant active aussi longtemps que l'équipement de communication (20) est attaché au premier réseau de communication,
- des moyens de transmission de données relatives au premier type de service au travers de la première connexion établie avec la première passerelle, **caractérisé en ce que** l'équipement de communication (20) comprend des moyens d'établissement d'au moins une deuxième connexion avec une deuxième passerelle interconnectant le premier réseau de communication et un troisième réseau de communication conformément à un deuxième jeu de paramètres comprenant un identifiant de la deuxième passerelle et des paramètres relatifs à la transmission de données relatives à un deuxième type de service, la première connexion étant encore active.

8. Terminal de paiement situé dans un premier réseau de communication comprenant au moins un équipement de communication (20) comprenant
- des moyens d'établissement d'au moins une première connexion entre l'équipement de communication et une première passerelle (GW) interconnectant le premier réseau de communication et un deuxième réseau de communication conformément à un premier jeu de paramètres comprenant un identifiant de la première passerelle (GW) et des paramètres relatifs à la transmission de données relatives à un premier type de service dit sans garantie, ladite première connexion étant active aussi longtemps que l'équipement de communication (20) est attaché au premier réseau de communication,
- des moyens de transmission de données relatives au premier type de service au travers de la première connexion établie avec la première passerelle (GW), **caractérisé en ce que** l'équipement de communication comprend des moyens d'établissement d'au moins une deuxième connexion avec une deuxième passerelle interconnectant le premier réseau de communication et un troisième réseau de communication conformément à un deuxième jeu de paramètres comprenant un identifiant de la deuxième passerelle et des paramètres relatifs à la transmission de données relatives à un deuxième type de service, la première connexion étant encore active.

9. Produit programme d'ordinateur comprenant des instructions de code de programme pour la mise en œuvre d'un procédé de transmission selon l'une quelconque des revendications 1 à 7 lorsqu'il est exécuté par un processeur.

## Patentansprüche

1. Verfahren zur Datenübertragung, das von einer Kommunikationsausrüstung (20) durchgeführt wird, die sich in einem ersten Kommunikationsnetz befindet, wobei das Verfahren umfasst:
- einen Schritt des Herstellens mindestens einer ersten Verbindung zwischen der Kommunikationsausrüstung (20) und einem ersten Gateway (GW), das das erste Kommunikationsnetz und ein zweites Kommunikationsnetz miteinander verbindet, gemäß einem ersten Parametersatz, der eine Kennung des ersten Gateways (GW) und Parameter in Bezug auf die Übertragung von Daten, die sich auf einen ersten so genannten Best Effort-Servicetyp beziehen, umfasst, wobei die erste Verbindung solange aktiv ist, wie die Kommunikationsausrüstung (20) mit dem ersten Kommunikationsnetz verbunden ist,
- eine Phase der Übertragung von Daten, die sich auf den ersten Servicetyp beziehen, über die erste Verbindung, die zwischen der Kommunikationsausrüstung (20) und dem ersten Gateway (GW) hergestellt wurde, **dadurch gekennzeichnet, dass** das Verfahren, während der Übertragungsphase, einen Schritt des Herstellens mindestens einer zweiten Verbindung zwischen der Kommunikationsausrüstung (20) und einem zweiten Gateway, das das erste Kommunikationsnetz und ein drittes Kommunikationsnetz miteinander verbindet, gemäß einem zweiten Parametersatz umfasst, der eine Kennung des zweiten Gateways und Parameter in Bezug auf die Übertragung von Daten, die sich auf einen zweiten Servicetyp beziehen, umfasst.

2. Übertragungsverfahren nach Anspruch 1, **dadurch gekennzeichnet, dass** die Parameter in Bezug auf die Übertragung der Daten, die sich auf den zweiten Servicetyp beziehen, mindestens einen Parameter umfassen, der für einen Servicetyp repräsentativ ist, der den zu übertragenden Daten zugeordnet ist.

3. Übertragungsverfahren nach Anspruch 2, **dadurch gekennzeichnet, dass** der Parameter, der für einen Servicetyp repräsentativ ist, der den zu übertragenden Daten zugeordnet ist, eine Kennung eines Service-Qualitätsniveaus umfasst, das den zu übertragenden Daten zugeordnet ist.

4. Übertragungsverfahren nach Anspruch 2 oder Anspruch 3, **dadurch gekennzeichnet, dass** der Parameter, der für einen Servicetyp repräsentativ ist, der den zu übertragenden Daten zugeordnet ist, eine Kennung eines Transport-Protokolls umfasst, gemäß denen die Daten zur Übertragung bestimmt sind.

5. Übertragungsverfahren nach Anspruch 1, **dadurch gekennzeichnet, dass** die Parameter in Bezug auf die Übertragung der Daten, die sich auf den ersten Servicetyp beziehen, und der Daten, die sich auf den zweiten Servicetyp beziehen, mindestens eine Kennung eines Betreibers, der das erste Kommunikationsnetz steuert, umfassen.

6. Übertragungsverfahren nach Anspruch 1, **dadurch gekennzeichnet, dass** die Parameter in Bezug auf die Übertragung der Daten, die sich auf einen ersten Servicetyp beziehen, und der Daten, die sich auf einen zweiten Servicetyp beziehen, mindestens eine Kennung eines Kartenfachs, das in der Kommunikationsausrüstung (20) ausgebildet ist und in das eine SIM-Karte zur Einführung bestimmt ist, umfassen.

7. Kommunikationsausrüstung (20), die sich in einem ersten Kommunikationsnetz befindet und umfasst:
- Mittel zum Herstellen mindestens einer ersten Verbindung zwischen der Kommunikationsausrüstung (20) und einem ersten Gateway (GW), das das erste Kommunikationsnetz und ein zweites Kommunikationsnetz miteinander verbindet, gemäß einem ersten Parametersatz, der eine Kennung des ersten Gateways (GW) und Parameter in Bezug auf die Übertragung von Daten, die sich auf einen ersten so genannten Best Effort-Servicetyp beziehen, umfasst, wobei die erste Verbindung solange aktiv ist, wie die Kommunikationsausrüstung (20) mit dem ersten Kommunikationsnetz verbunden ist,
- Mittel zum Übertragen von Daten, die sich auf den ersten Servicetyp beziehen, über die erste Verbindung, die mit dem ersten Gateway hergestellt wurde, **dadurch gekennzeichnet, dass** die Kommunikationsausrüstung (20) Mittel zum Herstellen mindestens einer zweiten Verbindung mit einem zweiten Gateway, das das erste Kommunikationsnetz und ein drittes Kommunikationsnetz miteinander verbindet, gemäß einem zweiten Parametersatz umfasst, der eine Kennung des zweiten Gateways und Parameter in Bezug auf die Übertragung von Daten, die sich auf einen zweiten Servicetyp beziehen, umfasst, wobei die erste Verbindung noch aktiv ist.

8. Zahlungsendgerät, das sich in einem ersten Kommunikationsnetz befindet, umfassend mindestens eine Kommunikationsausrüstung (20), die Folgendes umfasst:
- Mittel zum Herstellen mindestens einer ersten Verbindung zwischen der Kommunikationsausrüstung und einem ersten Gateway (GW), das das erste Kommunikationsnetz und ein zweites Kommunikationsnetz miteinander verbindet, gemäß einem ersten Parametersatz, der eine Kennung des ersten Gateways (GW) und Parameter in Bezug auf die Übertragung von Daten, die sich auf einen ersten so genannten Best Effort-Servicetyp beziehen, umfasst, wobei die erste Verbindung solange aktiv ist, wie die Kommunikationsausrüstung (20) mit dem ersten Kommunikationsnetz verbunden ist,
- Mittel zum Übertragen von Daten, die sich auf den ersten Servicetyp beziehen, über die erste Verbindung, die mit dem ersten Gateway (GW) hergestellt wurde, **dadurch gekennzeichnet, dass** die Kommunikationsausrüstung Mittel zum Herstellen mindestens einer zweiten Verbindung mit einem zweiten Gateway, das das erste Kommunikationsnetz und ein drittes Kommunikationsnetz miteinander verbindet, gemäß einem zweiten Parametersatz umfasst, der eine Kennung des zweiten Gateways und Parameter in Bezug auf die Übertragung von Daten, die sich auf einen zweiten Servicetyp beziehen, umfasst, wobei die erste Verbindung noch aktiv ist.

9. Computerprogrammprodukt, umfassend Programmcode-Anweisungen für die Durchführung eines Übertragungsverfahrens nach einem der vorhergehenden Ansprüche 1 bis 7, wenn er von einem Prozessor ausgeführt wird.

## Claims

1. A method of transmitting data implemented by a communication device (20) located in a first communication network, the method comprising:
- a step of establishing at least a first connection between the communication device (20) and a first gateway (GW) interconnecting the first communication network and a second communication network in accordance with a first set of parameters comprising an identifier of the first gateway (GW) and parameters relating to the transmission of data relating to a first type of service known as a non-guaranteed service, said first connection being active for as long as the communication device (20) is attached to the first communication network,
- a phase of transmitting data relating to the first type of service via said first connection established between the communication device (20) and the first gateway (GW), **characterised in that** the method comprises, during the transmission phase, a step of establishing at least a second connection between the communication device (20) and a second gateway interconnecting the first communication network and a third communication network in accordance with a second set of parameters comprising an identifier of the second gateway and parameters relating to the transmission of data relating to a second type of service.

2. A transmission method according to claim 1, **characterised in that** the parameters relating to the transmission of data relating to the second type of service comprise at least one parameter representative of a type of service associated with the data to be transmitted.

3. A transmission method according to claim 2, **characterised in that** the parameter representative of a service type associated with the data to be transmitted comprises an identifier of a quality of service level associated with the data to be transmitted.

4. A transmission method according to claim 2 or claim 3, **characterised in that** the parameter representative of a service type associated with the data to be transmitted comprises an identifier of a transport protocol according to which the data is intended to be transmitted.

5. A transmission method according to claim 1, **characterised in that** the parameters relating to the transmission of data relating to the first service type and data relating to the second service type comprise at least an identifier of an operator controlling the first communication network.

6. A transmission method according to claim 1, **characterised in that** the parameters relating to the transmission of data relating to a first type of service and data relating to a second type of service comprise at least an identifier of a slot provided in the communication device (20) and into which a SIM card is intended to be inserted.

7. Communication device (20) located in a first communication network and comprising:
- means for establishing at least a first connection between the communication device (20) and a first gateway (GW) interconnecting the first communication network and a second communication network in accordance with a first set of parameters comprising an identifier of the first gateway (GW) and parameters relating to the transmission of data relating to a first type of service known as a non-guaranteed service, said first connection being active for as long as the communication device (20) is attached to the first communication network,
- means for transmitting data relating to the first type of service via the first connection established with the first gateway, **characterised in that** the communication device (20) comprises means for establishing at least a second connection with a second gateway interconnecting the first communication network and a third communication network in accordance with a second set of parameters comprising an identifier of the second gateway and parameters relating to the transmission of data relating to a second type of service, the first connection still being active.

8. A payment terminal located in a first communication network comprising at least one communication device (20) comprising
- means for establishing at least a first connection between the communication device and a first gateway (GW) interconnecting the first communication network and a second communication network in accordance with a first set of parameters comprising an identifier of the first gateway (GW) and parameters relating to the transmission of data relating to a first type of service known as a non-guaranteed service, said first connection being active for as long as the communication device (20) is attached to the first communication network,
- means for transmitting data relating to the first type of service via the first connection established with the first gateway (GW), **characterised in that** the communication equipment comprises means for establishing at least a second connection with a second gateway interconnecting the first communication network and a third communication network in accordance with a second set of parameters comprising an identifier of the second gateway and parameters relating to the transmission of data relating to a second type of service, the first connection still being active.

9. A computer program product comprising program code instructions for implementing a transmission method according to any one of claims 1 to 7 when executed by a processor.
